# EUROPÄISCHE PATENTANMELDUNG

(11) **EP 0 580 998 A1**
(43) Veröffentlichungstag der Anmeldung: **02.02.1994**
(21) Anmeldenummer: 93109246.4
(22) Anmeldetag: 09.06.1993
(51) Int. Cl.: F16B 13/12

(54) **Metallspreizdübel**

(30) Priorität: 25.07.1992 DE 9210031 U
(71) Anmelder: fischerwerke Artur Fischer GmbH & Co. KG, D-72178 Waldachtal (DE)
(72) Erfinder: Schulte, Helmut, D-5880 Lüdenscheid (DE)

(57) **Zusammenfassung**

Bei Metallspreizdübeln (1) mit zylindersegmentförmigen Spreizzungen (3) und einer konischen Innenfläche (4) mit Schraubgewindegängen tritt das Problem auf, daß beim Eindrehen der Spannschraube der Spreizdübel in der Aufnahmebohrung mitdreht.

Um das Mitdrehen des Dübels in weiten Bohrlöchern zu verhindern und den Eintreibwiderstand für die Spannschraube zu reduzieren, ist das Außenprofil der Spreizzungen (3) mehrkantig ausgebildet.

## Beschreibung

Das Gebrauchsmuster betrifft einen Metallspreizdübel, dessen zylindersegmentförmige Spreizzungen eine konische Innenfläche mit Schraubgewindegängen aufweisen.

Ein Metallspreizdübel mit Kreisquerschnitt erfordert eine genau passende Dübelaufnahmebohrung. Trotzdem dreht sich der Metallspreizdübel beim Einschrauben der Spannschraube leicht mit. Dieses erschiwert die Befestigung und mindert außerdem den Halt.

Aufgabe des Gebrauchsmuster ist die Bereitstellung eines Metallspreizdübels, der sicher und verdrehfrei in ein vergleichsweise kleines Bohrloch eingesetzt und schnell festgespannt werden kann.

Diese Aufgabe wird nach dein Gebrauchsmuster dadurch gelöst, daß das Außenprofil der Spreizzungen mehrkantig ausgebildet ist.

Das Gebrauchsmuster unterscheidet sich insofern vom Stand der Technik, als die axial verlaufenden Kanten der Spreizzungen eine sichere Führunge in der Dübelaufnahmebohrung gewährleisten und eine Drehung des Metallspreizdübels verhindern. Die Kanten der Spreizzungen werden beim Spreizvorgang mit hoher spezifischer Pressung in die Wandung der Dübelaufnahmebohrung eingepreßt, so daß ein sicherer Halt gewährleistet ist. Der Metallspreizdübel ist für Beton sowie Voll- und Hohlmauerwerk geeignet.

Rechtkantige Spreizzungen erhält man dadurch, daß innerhalb eines quadratischen Außenquerschnitts durch zwei Schlitze parallel zu den Außenfläche vier Spreizzungen mit quadratischem Querschnitt ausgebildet sind. Man erreicht hier eine hohe Flächenpressung an den Kanten der Spreizzungen.

Die Anzahl der axialen Klemmkanten läßt sich dadurch erhöhen, daß innerhalb eines quadratischen Außenquerschnitts durch zwei diagonale Schlitze vier Spreizzungen mit dreieckförmigem Querschnitt ausgebildet sind.

Eine sichere Führung beim Einsetzen des Metallspreizdübels in die Dübelaufnahmebohrung erreicht man dadurch, daß der durch das mehrkantige Außenprofil bestimmte Umkreis einen größeren Durchmesser als der Durchmesser der Dübelaufnahmebohrung hat.

Die Ausreißsicherheit läßt sich dadurch steigern, daß auf der Außenseite der Spreizzungen quer zur Achsrichtung verlaufende Kerben angeordnet sind.

Ein Ausführungsbeispiel des Gebrauchsmusters wird im Folgenden unter Bezugnahme auf die Zeichnung erläutert, in der darstellen:
Fig. 1 eine Ansicht des Metallspreizdübels,
Fig. 2 eine Unteransicht zu Fig 2 und
Fig. 3 einen Schnitt durch den Metallspreizdübel.

Der dargestellte Metallspreizdübel 1 hat einen Quadratquerschnitt. Es ist auch ein anderer Mehreckquerschnitt möglich, z.B. ein Sechseckquerschnitt. An der Spitze ist der Metallspreizdübel 1 durch Schlitze 2 parallel zu den Seitenflächen in vier rechtkantige Spreizzungen 3 aufgeteilt. Die Innenfläche 4 verläuft konisch und weist ein Schraubgewinde auf. Der Umkreis des Außenquerschnitts bzw. die Länge der Diagonale ist größer als der Durchmesser der Dübelaufnahmebohrung 5.

Im Kantenbereich des Metallspreizdübels 1 sind quer zur Achsrichtung ausgerichtete Kerben 6 ausgebildet.

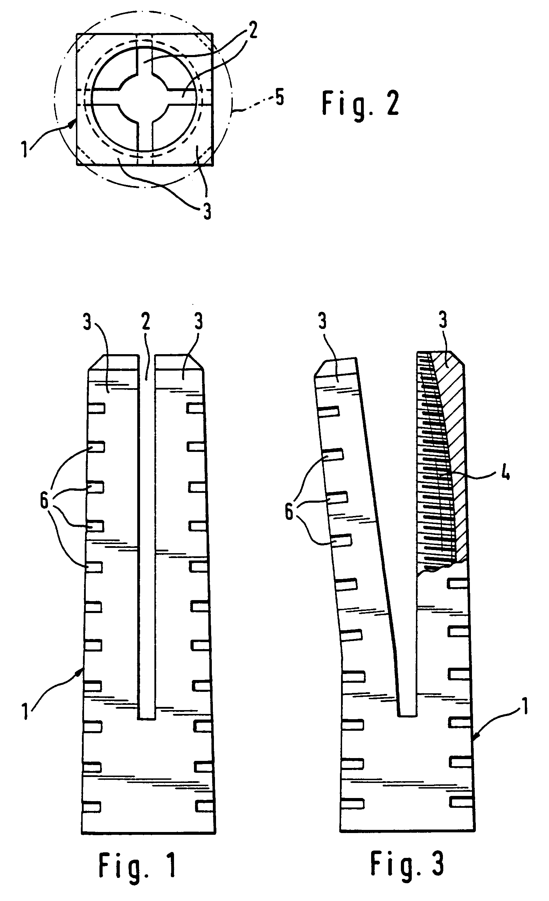

Der Metallspreizdübel 1 wird in der aus Fig. 2 ersichtlichen Weise in die Dübelaufnahmebohrung 5 eingesetzt. Dabei bieten die Kanten der Spreizzungen 3 eine Sicherung gegen Verdrehen. Beim Eindrehen der nicht dargestellten Spannschraube mit Maschinengewinde kann sich der Metallspreizdübel in der Dübelaufnahmebohrung nicht drehen. Im Zuge des Einschraubens werden die Spreizzungen 3 in bekannter Weise aufgespreizt, wie dies in der linken Hälfte der Fig. 3 dargestellt ist. Die Kerben 6 tragen zur Erhöhung der Ausreißsicherheit bei.

## Patentansprüche

1. Metallspreizdübel, dessen zylindersegmentförmige Spreizzungen eine konische Innenfläche mit Schraubgewindegängen aufweisen, dadurch gekennzeichnet, daß das Außenprofil der Spreizzungen (3) mehrkantig ausgebildet ist.

2. Metallspreizdübel nach Anspruch 1, dadurch gekennzeichnet, daß innerhalb eines quadratischen Außenquerschnitts durch zwei Schlitze (2) parallel zu den Außenfläche vier Spreizzungen (3) mit quadratischem Querschnitt ausgebildet sind.

3. Metallspreizdübel nach Anspruch 1, dadurch gekennzeichnet, daß innerhalb eines quadratischen Außenquerschnitts durch zwei diagonale Schlitze vier Spreizzungen mit dreieckförmigem Querschnitt ausgebildet sind.

4. Metallspreizdübel nach einem der Ansprüche 1 bis 3, dadurch gekennzeichnet, daß der durch das mehrkantige Außenprofil bestimmte Umkreis einen größeren Durchmesser als der Durchmesser der Dübelaufnahmebohrung (5) hat.

5. Metallspreizdübel nach einem der Ansprüche 1 bis 4, dadurch gekennzeichnet, daß auf der Außenseite der Spreizzungen (3) quer zur Achsrichtung verlaufende Kerben (6) angeordnet sind.
